# EUROPÄISCHE PATENTANMELDUNG

(11) **EP 2 596 992 A2**
(43) Veröffentlichungstag der Anmeldung: **29.05.2013**
(21) Anmeldenummer: 12005712.0
(22) Anmeldetag: 07.08.2012
(51) Int. Cl.: B60Q 1/38, B60Q 1/34, B60Q 1/00

(54) **Kraftfahrzeugleuchte, Kraftwagen und Verfahren zum Betreiben einer Kraftfahrzeugleuchte**

(30) Priorität: 23.11.2011 DE 102011119231
(71) Anmelder: AUDI AG, 85045 Ingolstadt (DE)
(72) Erfinder: Huhn, Wolfgang, 85084 Reichertshofen (DE); Stadler, Manfred, 86633 Neuburg (DE); Freudenberger, Mona, 74906 Bad Rappenau (DE)
(74) Vertreter: Thielmann, Frank

(57) **Zusammenfassung**

Eine Aufgabe der vorliegenden Erfindung ist es, bei einem Kraftwagen gut erkennbare und leicht eingängige Leuchtsignale für andere Verkehrsteilnehmer zu erzeugen. Die erfindungsgemäße Kraftfahrzeugleuchte (10) weist einen Lichtleiter (54, 56, 58) in ihrem Inneren auf, welcher dazu ausgestaltet ist, zumindest einen Teil eines Lichts einer Lichtquelle (t, u, v, w) zu empfangen, das empfangene Licht entlang einer Lichtaustrittsfläche (40) der Kraftfahrzeugleuchte (10) zu verteilen und das verteilte Licht zu der Lichtaustrittsfläche (40) hin auszustreuen. Bei dem erfindungsgemäßen Verfahren wird beim Einschalten einer Kraftfahrzeugleuchte (10) in einer Aufleuchtphase (68) eine Leuchtintensität (I) eines Lichts in einem für einen menschlichen Betrachter kontinuierlich erscheinenden Vorgang vergrößert. Hierzu wird eine Mehrzahl von Leuchtdioden (t+u, v, w) der Kraftfahrzeugleuchte (10) zeitlich nacheinander eingeschaltet, und/oder es werden die Leuchtdioden zunächst mit unterschiedlicher elektrischer Leistung versorgt und anschließend durch kontrolliertes Angleichen der Leistungen in der Helligkeit aneinander angeglichen.

## Beschreibung

Die Erfindung betrifft eine Kraftfahrzeugleuchte für einen Kraftwagen, bei welcher Licht mittels einer Lichtquelle erzeugbar und durch eine Lichtaustrittsfläche hindurch nach außen hin abstrahlbar ist. Ein weiterer Aspekt der Erfindung betrifft ein Verfahren zum Betreiben einer Kraftfahrzeugleuchte. Zu der Erfindung gehört schließlich auch ein Kraftwagen mit einer Kraftfahrzeugleuchte. Eine Kraftfahrzeugleuchte der genannten Art ist beispielsweise aus der DE 101 30 259 A1 bekannt.

Bei Kraftfahrzeugen, also Straßenfahrzeugen wie etwa Personenkraftwagen oder Lastkraftwagen, ist man im Interesse der Verkehrssicherheit bestrebt, eine bevorstehende Änderung des Fahrverhaltens des Kraftfahrzeugs den übrigen Verkehrsteilnehmern möglichst gut erkennbar und mit geringer Verzögerung anzuzeigen. Hierzu sind in einem Kraftfahrzeug Kraftfahrzeugleuchten, wie etwa Fahrtrichtungsanzeiger (Blinker) und Bremsleuchten, bereitgestellt. Um mittels dieser Kraftfahrzeugleuchten eine Änderung der Fahrsituation möglichst schnell anzuzeigen, werden heutzutage als Leuchtmittel dieser Kraftfahrzeugleuchten Leuchtdioden verwendet. Diese erreichen innerhalb von weniger als 10 ms ihre volle Leuchtstärke. Glühlampen benötigen dagegen eine Zeitdauer zwischen 150 ms und 200 ms. Bei der Verwendung von Leuchtdioden leuchtet die Lichtaustrittsfläche der Kraftfahrzeugleuchte also beim Einschalten nahezu instantan mit der vollen Leuchtkraft auf. Ein solcher instantaner Wechsel hat allerdings nicht nur Vorteile. Insbesondere bei unübersichtlichen Verkehrssituationen mit vielen Verkehrsteilnehmern ist es einem Fahrer oftmals nicht möglich, sämtliche Fahrzeuge zugleich im Auge zu behalten. Wendet er hier sein Augenmerk kurz von einem der Fahrzeuge ab und wird in diesem Moment eine Kraftfahrzeugleuchte dieses Fahrzeugs eingeschaltet, so sieht der besagte Fahrer diesen Übergang nicht. Nach Zurückwenden des Blickes auf das Fahrzeug bietet sich im dann zwar ein verändertes, aber statisches Bild des Fahrzeugs. Bei einer sehr großen Anzahl von Fahrzeugen wird er deshalb eventuell nicht auf die Veränderung aufmerksam. Er hat den nur wenige Millisekunden dauernden Übergang verpasst, durch welchen seine Aufmerksamkeit zusätzlich auf das Fahrzeug hätte gezogen werden könnte.

Eine weitere markante, und nicht immer erwünschte Eigenschaft von Leuchtdioden als Leuchtmitteln ist, dass diese nicht so leuchtstark sind wie beispielsweise Xenon-Lampen. Es müssen daher immer mehrere Leuchtdioden in einer Matrix angeordnet und zugleich betrieben werden. Anstelle einer gleichmäßig ausgeleuchteten Lichtaustrittsfläche der Kraftfahrzeugleuchte sieht ein Betrachter dann eine Matrix aus hellen Punkten. Der Abstand dieser Punkte darf dabei nicht so groß sein, dass ein Betrachter die Ansammlung dieser hellen Punkte nicht mehr als einzelne Leuchte wahrnimmt, die ihm etwas signalisieren soll. Für große Lichtaustrittsflächen sind somit entsprechend viele Leuchtdioden nötig, auch wenn die Leuchtkraft weniger Leuchtdioden eigentlich ausreichen würde.

In Zusammenhang mit einer deutlicheren Darstellung eines bevorstehenden Fahrtrichtungswechsels mittels eines Fahrtrichtungsanzeigers ist in der oben genannten Druckschrift ein Blinklicht beschrieben, bei welchem eine Reihe von Leuchtmitteln nacheinander eingeschaltet wird, sodass ein Lauflichteffekt oder Animationseffekt innerhalb der Blinkleuchte entsteht. Das Anzeigen eines Fahrtrichtungswechsels mittels eines Lauflichts ist jedoch nicht in allen Ländern gesetzlich zugelassen. So ergibt sich beispielsweise aus den ECE-Regelungen (ECE - Economic Commission for Europe), dass bei einer Blinkleuchte der während der Fahrtrichtungsanzeige blinkende Bereich bezüglich des Fahrzeugs ortsfest sein muss. Mit anderen Worten darf der beleuchtete Bereich beim Blinken nicht durch einen Lauflichteffekt in der Blinkleuchte von einer Seite auf die andere wandern.

Eine Aufgabe der vorliegenden Erfindung ist es, bei einem Kraftwagen gut erkennbare und leicht eingängige Leuchtsignale für andere Verkehrsteilnehmer zu erzeugen.

Die Aufgabe wird durch eine Kraftfahrzeugleuchte gemäß Patentanspruch 1, ein Verfahren gemäß Patentanspruch 7, eine Kraftfahrzeugleuchte gemäß Patentanspruch 14 sowie einen Kraftwagen gemäß Patentanspruch 15 gelöst. Vorteilhafte Weiterbildungen der Erfindung sind durch die Unteransprüche gegeben.

Durch das erfindungsgemäße Verfahren wird erreicht, dass sich beim Einschalten einer Kraftfahrzeugleuchte deren Gesamtlichtaustrittsfläche nicht instantan, sondern über einen vorbestimmten Zeitraum hinweg mit Licht füllt. Die Gesamtlichtaustrittsfläche, also die Lichtscheibe, wird hierbei in der Aufleuchtphase mit der Zeit graduell heller und/oder ein beleuchteter Anteil der Gesamtaustrittsfläche wird mit der Zeit größer. Das erfindungsgemäße Verfahren ermöglicht dabei das Erzeugen der Aufleuchtphase auch mit Leuchtdioden und opfert dabei dennoch nicht den Zeitvorteil, der aufgrund der geringen Aufleuchtzeit der Leuchtdioden beim Anzeigen einer geänderten Fahrsituation erreicht werden kann.

Bei dem erfindungsgemäßen Verfahren wird dazu beim Einschalten der Kraftfahrzeugleuchte in einer Aufleuchtphase die Leuchtintensität des abgestrahlten Lichts in einem für einen menschlichen Betrachter kontinuierlich erscheinenden Vorgang vergrößert. Hierzu wird eine Mehrzahl von Leuchtdioden der Leuchte zeitlich nacheinander eingeschaltet. Statt dieses zeitlich versetzten Einschaltens oder zusätzlich dazu kann auch vorgesehen sein, die Leuchtdioden zunächst mit unterschiedlicher elektrischer Leistung zu versorgen, so dass von Beginn an wenigstens eine hell leuchtende Leuchtdiode und einige dunklere Leuchtdioden sichtbar sind. Anschließend wird dann durch kontrolliertes Angleichen der Leistungen die Helligkeit angeglichen.

Bei dem erfindungsgemäßen Verfahren werden also zumindest einige der Leuchtdioden instantan eingeschaltet, wenn die Kraftfahrzeugleuchte das entsprechende Signal empfängt. Davon ausgehend werden dann weitere Leuchtdioden hinzugeschaltet oder deren Leistung kontinuierlich erhöht. Indem der Vorgang dabei derart gesteuert wird, dass er für einen Betrachter kontinuierlich erscheint, ergibt sich für einen Betrachter ein fließender Bewegungseindruck, also keine abrupten Übergänge, die der Betrachter beispielsweise durch Blinzeln übersehen könnte. Solche fließenden Übergänge haben den physiologischen Effekt, dass sie die Aufmerksamkeit eines Betrachters wecken. Durch die zeitliche Komponente benötigt ein Betrachter sogar weniger Blickzuwendungszeit, um die Veränderung zu erkennen. Ein nicht unbeachtlicher, weiterer Vorteil ist die attraktive Inszenierung der Kraftfahrzeugleuchte durch eine Aufleuchtphase.

Um beim zeitlich aufeinanderfolgenden Einschalten von einzelnen Leuchtdioden bei einem menschlichen Betrachter den Eindruck zu erwecken, dass die Helligkeit kontinuierlich zunimmt, sollten zwei nacheinander eingeschaltete Leuchtdioden mit einem Zeitversatz eingeschaltet werden, der kleiner als 60 ms, insbesondere kleiner als 45 ms, ist. Hierdurch wird ein Effekt erreicht, den man auch bei Kinofilmen kennt, wo zwischen den einzelnen Bildern eines Films innerhalb von 40 ms umgeschaltet wird und so "bewegte Bilder" erzeugt werden.

Mittels des erfindungsgemäßen Verfahrens lassen sich eine Vielzahl von unterschiedlichen Typen von für die Signalgebung ausgestalteten Kraftfahrzeugleuchten betreiben, insbesondere Kraftfahrzeugleuchten, die wenigstens eine der folgenden Funktionalitäten bereitstellen: eine Fahrtrichtungsanzeige, ein Bremslicht, ein Tagfahrlicht, ein Positionslicht und ein Schlusslicht.

Wie bereits eingangs erläutert, gibt es insbesondere in Zusammenhang mit Fahrtrichtungsanzeigern die gesetzliche Beschränkung, dass kein Lauflichteffekt dargestellt werden darf. Hierzu sieht eine Ausführungsform des erfindungsgemäßen Verfahrens vor, dass eine Zeitdauer der Aufleuchtphase in einem Bereich von 100 ms bis 200 ms, insbesondere in einem Bereich von 100 ms bis 160 ms, liegt. Mit anderen Worten dauert die Aufleuchtphase insgesamt nicht länger, als eine Glühlampe zum Erreichen ihrer vollen Helligkeit benötigt. Damit unterscheidet sich ein zeitlicher Verlauf der Leuchtintensität des insgesamt abgestrahlten Lichts nicht von demjenigen einer konventionellen, mit einer Glühlampe betriebenen Kraftfahrzeugleuchte. Selbst wenn somit auf Grundlage des erfindungsgemäßen Verfahrens ein Lauflichteffekt oder ein anderer animierter Eindruck beim Betrachter erzeugt wird, dauert dieser Effekt nicht länger als das Einschalten einer herkömmlichen Kraftfahrzeugleuchte mit Glühlampe. Er bleibt damit innerhalb der gesetzlichen Anforderungen.

Entsprechend ist es deshalb möglich, auch innerhalb der gesetzlichen Anforderungen in der Aufleuchtphase Leuchtdioden zeitlich nacheinander einzuschalten und hierdurch einen ausgeleuchteten Teil der Gesamtlichtaustrittsfläche in der Aufleuchtphase kontinuierlich zu vergrößern, so dass sich die Gesamtaustrittsfläche stetig mit Licht füllt. Dieser Effekt des Auffüllens der Gesamtlichtaustrittsfläche wird als Animation vom Betrachter wahrgenommen, die beispielsweise auch einen bevorstehenden Richtungswechsel anzeigen kann. Bei dem kontinuierlich größer werdenden ausgeleuchteten Anteil der Gesamtlichtaustrittsfläche handelt es sich insbesondere um einen örtlich zusammenhängenden Anteil.

Um in der vorstehend beschriebenen Weise eine Richtungsinformation besonders deutlich zu kodieren und die Kraftfahrzeugleuchte hierdurch als Blinklicht zu betreiben, ist gemäß einer Ausführungsform des erfindungsgemäßen Verfahrens vorgesehen, eine Mehrzahl von Leuchtdioden, die in einer Zeile oder Reihe nebeneinander angeordnet sind, wie folgt zu betreiben: Zu Beginn eines Blinkzyklus werden in einer Aufleuchtphase einzelne Leuchtdioden oder auch Gruppen von Leuchtdioden nacheinander eingeschaltet. Hierzu werden ausgehend von einer Anfangsgruppe aus Leuchtdioden, die wenigstens eine der Leuchtdioden aus der Leuchtdioden-Reihe umfasst, der Reihe nach weitere Leuchtdioden der Reihe einzeln oder auch in Gruppen von mehreren benachbarten Leuchtdioden zeitlich nacheinander eingeschaltet. Mit anderen Worten wird so in der Aufleuchtphase des Blinkzyklus eine kontinuierlich länger werdende Zeile oder Reihe aus leuchtenden Leuchtdioden gebildet. Abschließend wird eine am Ende der Reihe befindliche Endgruppe aus den verbleibenden Leuchtdioden eingeschaltet, sodass alle Leuchtdioden der Reihe leuchten. Hiermit ist die Aufleuchtphase dann beendet. Die Reihe der Leuchtdioden kann dann beispielsweise für 400 ms eingeschaltet bleiben, um dann für zum Beispiel eine halbe Sekunde ausgeschaltet zu bleiben, bis der nächste Blinkzyklus beginnt.

Das Ansteuern der einzelnen Gruppen von Leuchtdioden in zeitlicher Abfolge erfordert die Steuerung entsprechender Schalter für die einzelnen Leuchtdiodengruppen. Dies kann beispielsweise mittels eines Mikrocontrollers durchgeführt werden. Problematisch kann dies allerdings bei Kraftfahrzeugleuchten sein, die aus wenigstens zwei baulich voneinander getrennten Teilen bestehen. Ein Beispiel für eine solche Kraftfahrzeugleuchte ist eine Rückleuchte, bei welcher ein Teil für einen Einbau in eine Heckklappe des Kraftfahrzeugs und ein anderer Teil für einen Einbau in eine an die Heckklappe angrenzende Seitenwand des Fahrzeugs vorgesehen ist. Um die Notwendigkeit von zwei Mikrocontrollern zu vermeiden (je einer für eines der Bauteile der Kraftfahrzeugleuchte), sieht eine zweckmäßige Ausführungsform des Verfahrens zum Betreiben der in Reihe angeordneten Leuchtdioden vor, dass sich die Reihe der Leuchtdioden zwar über die wenigstens zwei baulich voneinander getrennten Teile des Kraftfahrzeugs erstreckt, hierbei aber die in einem der Teile befindlichen Leuchtdioden als die Anfangsgruppe oder die Endgruppe stets zugleich betrieben werden. Mit anderen Worten werden bei einem der Teile der Kraftfahrzeugleuchte sämtliche darin befindlichen Leuchtdioden der Reihe als Leuchtdioden-Gruppe zeitgleich geschaltet. In diesem Bauteil der Kraftfahrzeugleuchte muss dann kein gesonderter Mikrocontroller bereitgestellt sein, der in der Lage wäre, die Leuchtdioden nacheinander einzuschalten. Ein weiterer Vorteil besteht darin, dass das Bauteil mit den stets zugleich geschalteten Leuchtdioden wie ein herkömmlicher Blinker ohne Lauflichteffekt erscheint.

Um dennoch in der Aufleuchtphase einen flüssigen Übergang zwischen den baulich getrennten Teilen der Kraftfahrzeugleuchte zu erreichen, sieht eine zweckmäßige Weiterbildung des Verfahrens vor, dass zwischen zwei benachbarten Teilen der Kraftfahrzeugleuchte ein Handshake-Signal übertragen wird, nachdem alle Leuchtdioden eines der Teile eingeschaltet worden sind. Durch das Handshake-Signal wird dann nahtlos das Einschalten der Leuchtdioden des anderen Teils ausgelöst.

Um eine Kraftfahrzeugleuchte bereitzustellen, die gemäß einer der beschriebenen Ausführungsformen des erfindungsgemäßen Verfahrens betrieben werden kann, ohne dass dabei der Rest des Kraftfahrzeugs in besonderer Weise umgestaltet werden muss, sieht ein Aspekt der Erfindung eine Kraftfahrzeugleuchte vor, welche eine Steuereinheit aufweist, die z.B. durch einen Mikrocontroller realisiert sein kann und die dazu eingerichtet ist, die Kraftfahrzeugleuchte nach einer der beschriebenen Ausführungsformen des Verfahrens zu betreiben.

Wie bereits erwähnt, müssen nicht stets einzelne Leuchtdioden nacheinander eingeschaltet werden. Es können auch jeweils ganze Gruppen von Leuchtdioden zugleich eingeschaltet werden. Durch die Anzahl und die Platzierung der Leuchtdioden einer Gruppe wird dann vorgegeben werden, wie groß der Flächenanteil an der Gesamtaustrittsfläche ist, der beim Einschalten dieser Gruppe aufleuchtet. Sollen verhältnismäßig große Flächenanteile zugleich eingeschaltet werden, kann dies einen erhöhten Schaltungsaufwand ergeben, welcher wiederum in unerwünscht hohen Herstellungskosten resultiert. Gemäß dem weiteren Aspekt der Erfindung ist bei einer Kraftfahrzeugleuchte in diesem Zusammenhang eine Lichtquelle vorgesehen, bei welcher Licht mittels eines Lichtleiters in der Kraftfahrzeugleuchte verteilt wird. Der Lichtleiter ist dazu ausgestaltet, zumindest einen Teil des Lichts einer Lichtquelle zu empfangen, das empfangene Licht entlang der Lichtaustrittsfläche zu verteilen und das verteilte Licht zur Lichtaustrittsfläche hin auszustreuen. Bei der erfindungsgemäßen Kraftfahrzeugleuchte strahlt die Lichtquelle also ihr Licht nicht direkt durch die Lichtaustrittsfläche hindurch nach außen ab. Stattdessen wird das Licht mittels des Lichtleiters zunächst entlang der Lichtaustrittsfläche, also parallel zu ihr, verteilt und dann über eine größere Fläche hinweg verteilt nach außen hin abgestrahlt. Dies wird dabei ohne großen Schaltungsaufwand mit einer einzigen Lichtquelle ermöglicht. Gegenüber der Verwendung von zu Gruppen zusammengeschalteten Leuchtdioden weist die Verwendung eines Lichtleiters zudem den Vorteil auf, dass keine punktförmigen hellen Bereiche an der Lichtaustrittsfläche von außen erkennbar sind. Das Licht kann mittels des Lichtleiters gleichmäßig verteilt und mit gleichmäßiger Intensität abgestrahlt werden. Der Lichtleiter verteilt das Licht hierzu bevorzugt über ein Strecke mit einer Länge von wenigstens 4cm entlang der Lichtscheibe.

Die erfindungsgemäße Kraftfahrzeugleuchte wird bevorzugt mit Leuchtdioden betrieben, kann aber auch mit anderen Lichtquellen, beispielsweise Xenon-Lampen oder anderen Gasentladungslampen oder auch Glühlampen, betrieben werden.

Um Streuverluste im Lichtleiter zu vermeiden, sollte das Licht möglichst selten umgelenkt werden. Hierzu sieht eine zweckmäßige Ausführungsform der erfindungsgemäßen Kraftfahrzeugleuchte vor, dass die Lichtquelle eine Hauptabstrahlrichtung aufweist, in welcher die Lichtquelle das Licht mit einer größten Intensität abstrahlt. Beispielsweise handelt es sich bei Leuchtdioden um Lichtquelle mit einer besonders stark gerichteten Abstrahlcharakteristik. Die Lichtquelle ist nun derart in der Kraftfahrzeugleuchte angeordnet, dass die Hauptabstrahlrichtung mit der Lichtaustrittsfläche einen Winkel einschließt, der betragsmäßig in einem Bereich von 0° bis 50°, insbesondere in einem Bereich von 0° bis 30°, liegt. Die Lichtquelle strahlt ihr Licht also gerade nicht in die Richtung ab, in welche das Licht schließlich aus der Lichtaustrittsfläche aus der Kraftfahrzeugleuchte austritt. Die Lichtquelle strahlt stattdessen quer dazu ab, wodurch es leichter ist, ihr Licht mittels des Lichtleiters entlang der Lichtaustrittsfläche zu verteilen.

Bei dem Lichtleiter kann es sich um die Lichtscheibe der Kraftfahrzeugleuchte selbst handeln, also um diejenige Scheibe, welche die Lichtaustrittsfläche aufweist und welche die Kraftfahrzeugleuchte nach außen hin begrenzt. Eine andere zweckmäßige Ausführungsform der Kraftfahrzeugleuchte sieht vor, dass der Lichtleiter einen Körper aus einem für das Licht transparenten Material umfasst, welcher hinter der Lichtscheibe angeordnet ist. Ein solches separates Bauteil lässt sich dann in vorhandene Typen von Kraftfahrzeugleuchten ohne aufwändige Umgestaltung dieser Leuchten integrieren.

Durch das Verteilen des Lichts der Lichtquelle wird die Helligkeitsverteilung auf der Lichtaustrittsfläche zwar gleichmäßiger. Die Leuchte kann dabei aber in einzelnen Bereichen gegebenenfalls auch dunkler erscheinen. Soll dieser Effekt kompensiert werden, sieht eine Ausführungsform der Kraftfahrzeugleuchte vor, bei dem Lichtleiter Licht an zwei unterschiedlichen Enden des Lichtleiters mittels jeweils wenigstens einer Lichtquelle einzuspeisen.

Um das Licht der Lichtquellen für die gleichmäßige Ausleuchtung der Lichtaustrittsfläche nicht über einen allzu großen Bereich verteilen zu müssen, oder um gemäß dem beschriebenen erfindungsgemäßen Verfahren einzelne Anteile der Gesamtlichtaustrittsfläche zeitlich nacheinander zu beleuchten, kann eine Mehrzahl von Lichtleitern der genannten Art bei der erfindungsgemäßen Kraftfahrzeugleuchte vorgesehen sein. Mittels jedem der Lichtleiter kann dann ein vorbestimmter Bereich der Lichtaustrittsfläche unabhängig von den übrigen Bereichen ausgeleuchtet werden.

Auch in Zusammenhang mit der erfindungsgemäßen Kraftfahrzeugleuchte kann diese natürlich unterschiedliche Funktionalitäten in Zusammenhang mit der Signalisierung von Fahrsituationen bereitstellen. Diese können beispielsweise sein: eine Fahrtrichtungsanzeige, Tagfahrlicht, Positionslicht, ein Schlusslicht, ein Bremslicht.

Zu der Erfindung gehört schließlich auch ein Kraftwagen, welcher wenigstens eine Kraftfahrzeugleuchte aufweist, welche eine Ausführungsform der beschriebenen erfindungsgemäßen Kraftfahrzeugleuchten darstellt.

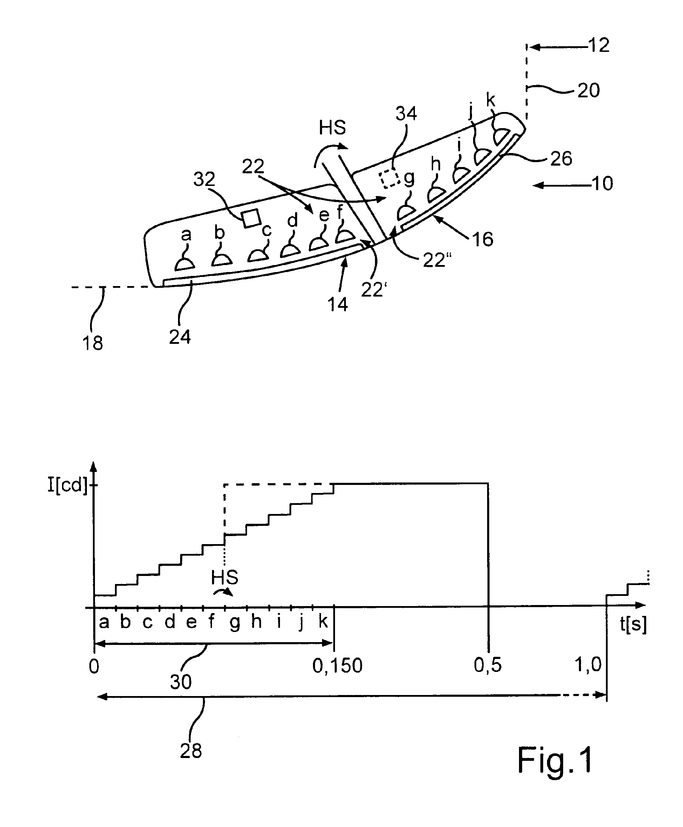

Die Erfindung wird im Folgenden anhand von Ausführungsbeispielen näher erläutert. Dazu zeigen Fig. 1 bis Fig. 4 jeweils eine schematische Darstellung einer Ausführungsform einer erfindungsgemäßen Kraftfahrzeugleuchte, die gemäß einer Ausführungsform des erfindungsgemäßen Verfahrens betrieben wird.

Die Beispiele stellen bevorzugte Ausführungsformen der Erfindung dar.

In Fig. 1 ist eine Kraftfahrzeugleuchte 10 gezeigt, die in einem Straßenfahrzeug 12, beispielsweise einem Personenkraftwagen, eingebaut ist. Bei der

Kraftfahrzeugleuchte 10 kann es sich beispielsweise um einen Frontscheinwerfer mit integriertem Blinklicht und Tagfahrlicht oder um eine Heckleuchte mit integriertem Bremslicht, Rücklicht und Blinklicht handeln. Die Kraftfahrzeugleuchte 10 kann aus zwei baulich getrennten Teilen 14, 16 bestehen. Der Teil 14 kann in einer Heckklappe 18, der Teil 16 in einer Seitenwand 20 des Kraftfahrzeugs 12 eingebaut sein. Von der Kraftfahrzeugleuchte 10 ist in Fig. 1 eine Reihe 22 aus Leuchtdioden a bis k gezeigt. Die Reihe 22 der Leuchtdioden a bis k gehört zu einem Blinklicht für eine Fahrtrichtungsanzeige. Ein Licht der Lichtdioden a bis k kann durch jeweilige transparente Scheiben 24, 26 der Teile 14 bzw. 16 aus der Kraftfahrzeugleuchte 10 austreten.

Um für andere Verkehrsteilnehmer mittels der Kraftfahrzeugleuchte 10 ein Blinklichtsignal für eine Fahrtrichtungsanzeige zu erzeugen, wird von einem (nicht dargestellten) Steuergerät des Kraftfahrzeugs 12 ein Steuersignal an die Kraftfahrzeugleuchte 10 übertragen. Bei dem Steuersignal kann es sich beispielsweise um eine einfache Pulsfolge mit einer Periodendauer handeln, die in einem Bereich von 650 ms bis 2 s liegen kann. Das Blinklicht blinkt dann entsprechend mit einer Frequenz zwischen 1,5 Hz und 0,5 Hz. Im vorliegenden Beispiel sei angenommen, dass ein Blinkzyklus 28 eine Dauer von 1 s aufweist. In Fig. 1 ist hierzu gezeigt, wie die Leuchtdioden a bis k in einer Aufleuchtphase 30 nicht gleichzeitig, sondern nacheinander eingeschaltet werden. In dem in Fig. 1 gezeigten Diagramm ist an der Zeitachse angegeben, zu welchen Zeitpunkten die einzelnen Leuchtdioden a bis k während der Aufleuchtphase 30 hinzugeschaltet werden. Eine Leuchtintensität l, wie sie über die Gesamtaustrittsfläche der Scheiben 24 und 26 gemessen ist, nimmt hierdurch stufenweise zu. Die Aufleuchtphase 30 kann beispielsweise 150 ms dauern. Der Zeitversatz zwischen dem Einschalten der einzelnen Leuchtdioden a bis k ist dabei so gering, dass für einen menschlichen Betrachter der Kraftfahrzeugleuchte 10 die Stufigkeit der Zunahme eine Gesamthelligkeit oder Leuchtintensität l nicht erkennbar ist. Stattdessen nimmt der Betrachter eine kontinuierlich breiter werdende Reihe von leuchtenden Leuchtdioden a bis k wahr.

Die Umsetzung des Steuersignals des Steuergeräts, welches lediglich die Dauer der Ein- und der Aus-Phase vorgibt, in die Schaltfolge für die einzelnen Leuchtdioden a bis k kann durch Mikrocontroller 32, 34 der Kraftfahrzeugleuchte 10 erfolgen. Um einen fließenden Übergang in der Aufleuchtphase zwischen der Teilreihe 22' des Teils 14 und der Teilreihe 22" des Teils 16 der Kraftfahrzeugleuchte 10 zu erhalten, wird nach dem Einschalten der Leuchtdiode f ein Handshake-Signal HS von dem Teil 14 zu dem Teil 16 übertragen. Hierdurch wird dann das Einschalten der Leuchtdiode g und der weiteren Leuchtdioden h bis k ausgelöst.

Bei der Kraftfahrzeugleuchte 10 kann auch vorgesehen sein, nicht alle Leuchtdioden a bis k zeitlich nacheinander einzuschalten. Beispielsweise kann auch vorgesehen sein, die Leuchtdioden g bis k der Teilreihe 22" in dem Teil 16 der Kraftfahrzeugleuchte 10 zu einer Endgruppe zusammenzufassen, sodass die Leuchtdioden g bis k stets gemeinsam, d.h. zeitgleich, an- und/oder ausgeschaltet werden. Dann ist es nicht nötig, den Mikrocontroller 34 in dem Teil 16 vorzusehen. In dem Diagramm ist dazu der sich dann ergebende alternative zeitliche Verlauf der Leuchtintensität l gestrichelt dargestellt. Ein Vorteil dieser Betriebsweise ist, dass bei geöffneter Heckklappe 18 der Teil 16 als konventionell blinkender Fahrtrichtungsanzeiger erscheint.

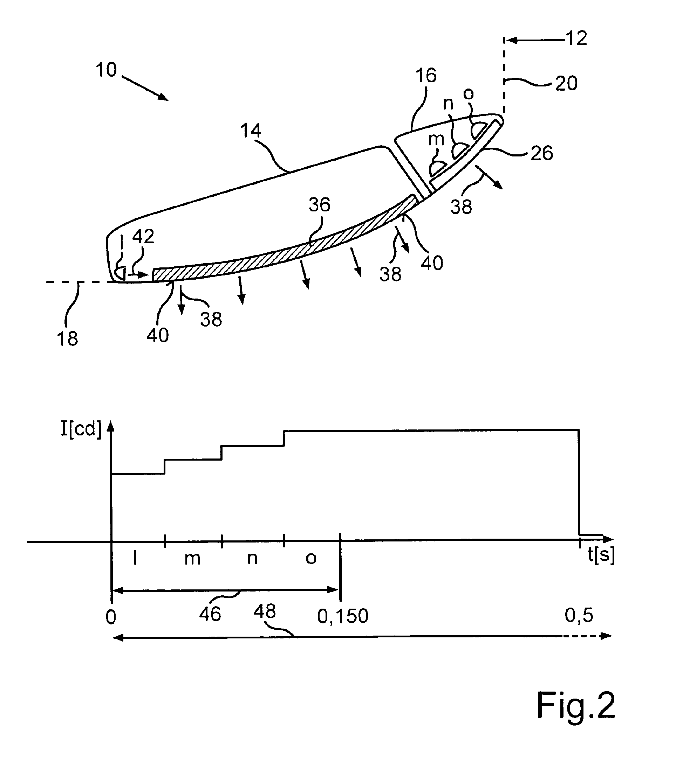

Im Folgenden werden anhand von Fig. 2 bis Fig. 4 weitere Ausgestaltungen eines erfindungsgemäßen Blinkers beschrieben. In Fig. 2 bis Fig. 4 sind dabei Elemente, die in ihrer Funktionsweise Elementen entsprechen, die in Fig. 1 dargestellt sind, mit denselben Bezugszeichen wie in Fig. 1 bezeichnet. Diese Elemente sind entsprechend für die folgenden Figuren auch nicht noch einmal erläutert.

In Fig. 2 ist eine Kraftfahrzeugleuchte 10 gezeigt, die aus zwei Teilen 14, 16 besteht. Von der Kraftfahrzeugleuchte 10 ist ein Fahrtrichtungsanzeiger dargestellt. Dieser umfasst im Bereich des Teils 14 eine Leuchtdiode l sowie einen Lichtleiter 36. Zu dem Fahrtrichtungsanzeiger gehören auch weitere Leuchtdioden m, n, o und eine transparente Scheibe 26. Das Licht der Leuchtdioden l bis o breitet sich nach einem Austritt aus der Kraftfahrzeugleuchte 10 in einem Raumwinkelbereich aus, welcher in Fig. 2 durch entsprechende Austrittsrichtungen 38 angedeutet ist. Von den Richtungspfeilen sind der Übersichtlichkeit halber nur einige mit Bezugszeichen versehen.

Die Leuchtdiode l strahlt ihr Licht dabei quer zu einer Lichtaustrittsfläche 40 des Teils 14 aus. Eine Hauptabstrahlrichtung 42 der Leuchtdiode l ist in Fig. 2 angedeutet. Die Hauptabstrahlrichtung 42 weist nahezu parallel zum Verlauf der Lichtaustrittsfläche 40 ausgerichtet. Die Lichtaustrittsfläche 40 ist Bestandteil des Lichtleiters 36. Das Licht der Leuchtdiode l koppelt an einer Seite des Lichtleiters 36 in diesen ein und wird innerhalb des Lichtleiters 36 entlang der Austrittsfläche 40 des Lichtleiters 36, d.h. parallel zu dieser, über eine Längserstreckung des Lichtleiters 36 durch interne Reflexion verteilt. Dabei wird das Licht zu gleichmäßigen Anteilen entlang der Austrittsfläche 40 in die Austrittsrichtung 38 ausgestreut. Das Ausstreuen kann beispielsweise durch eine Verzahnung einer Oberfläche des Lichtleiters 36 bewirkt werden. Die Austrittsfläche 40 erscheint so einem Betrachter der Kraftfahrzeugleuchte 10 im Betrieb der Leuchtdiode l gleichmäßig hell. In einem Diagramm ist in Fig. 2 dargestellt, welcher zeitlicher Verlauf einer Leuchtintensität l der Kraftfahrzeugleuchte 10 während der Aufleuchtphase 46 eines Blinkzyklus 48 sich bei der Kraftfahrzeugleuchte 10 ergibt. Die Leuchtintensität l ist dabei wieder über die gesamte Lichtaustrittsfläche ermittelt, welche sich aus der Austrittsfläche 40 und der Oberfläche der Scheibe 26 zusammensetzt (Gesamthelligkeit).

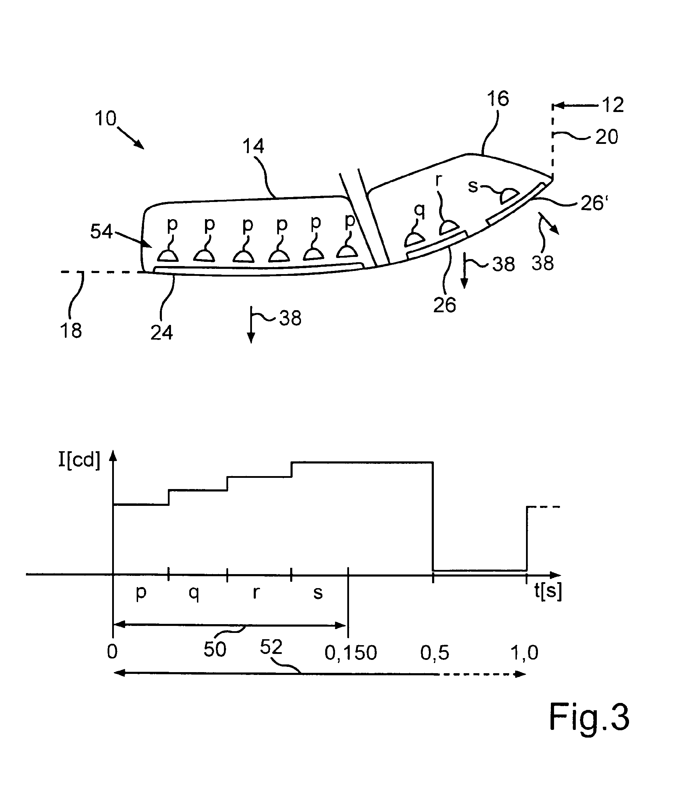

In Fig. 3 ist eine Kraftfahrzeugleuchte 10 gezeigt, deren Aufbau demjenigen der Kraftfahrzeugleuchte von Fig. 1 ähnlich ist. Bei der Fahrzeugleuchte 10 von Fig. 3 werden die in einer Reihe angeordneten Leuchtdioden p eines sich beispielsweise in einer Heckklappe 18 befindlichen Teils 14 der Kraftfahrzeugleuchte 10 zu Beginn einer Aufleuchtphase 50 eines Blinkzyklus 52 zusammen als Anfangsgruppe 54 zugleich eingeschaltet. Anschließend werden der Reihe nach weitere Leuchtdioden q, r, s eingeschaltet, die sich in einem von dem Teil 14 baulich getrennten Teil 16, beispielsweise in einer Seitenwand 20 des Kraftfahrzeugs 12, befinden. Ein über die Gesamtlichtaustrittsfläche von Lichtscheiben 24, 26, 26' ermittelter zeitlicher Verlauf der Leuchtintensität l der Kraftfahrzeugleuchte 10 ist in Fig. 3 in einem Diagramm ebenfalls dargestellt.

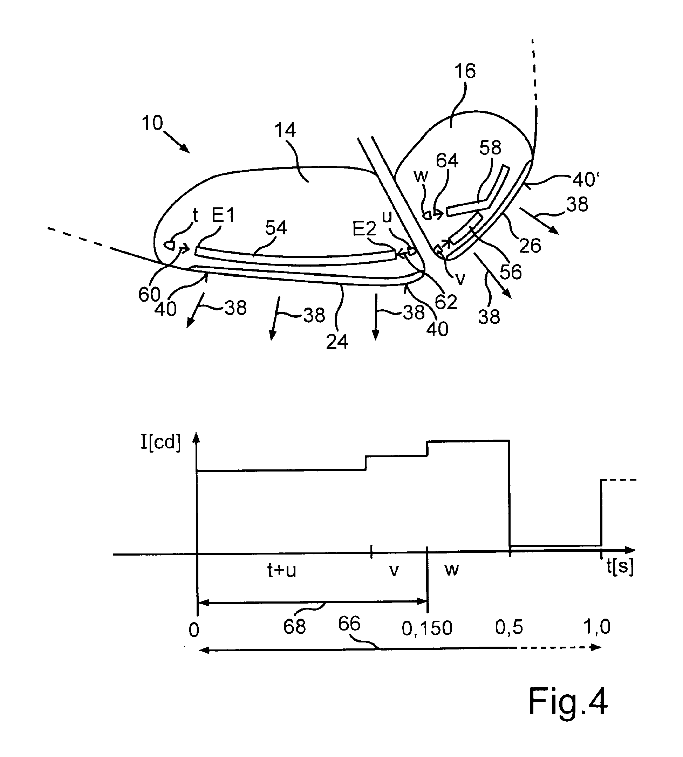

In Fig. 4 ist ein Kraftfahrzeugleuchte 10 gezeigt, die aus zwei baulich getrennten Teilen 14, 16 besteht. Hinter transparenten Scheiben 24, 26 sind Lichtleiter 54, 56, 58 angeordnet. Der Lichtleiter 54 weist eine längliche Form auf und erstreckt sich in Längsrichtung parallel zur Scheibe 24. Bei dem Lichtleiter 54 wird Licht von Leuchtdioden t, u an jeweiligen Enden E1, E2 des Lichtleiters 54 eingekoppelt. Dazu weisen Hauptabstrahlrichtungen 60, 62 der Leuchtdioden t, u in Richtung zu dem jeweiligen Ende E1, E2 hin, das ihr Licht empfängt. Die Hauptabstrahlrichtungen 60, 62 sind damit quer zur Scheibe 24 ausgerichtet. Das in den Lichtleiter 54 eingekoppelte Licht wird durch den Lichtleiter 54 entlang der Scheibe 24 mit ihrer Lichtaustrittsfläche 40 verteilt und dabei anteilig in die Lichtaustrittsrichtungen 38 zur Scheibe 24 hin ausgestreut.

Der Lichtleiter 58 weist eine längliche, gewinkelte Form auf. Eine Hauptabstrahlrichtung einer Leuchtdiode w weist auf ein Ende des Lichtleiters 58. Ein Großteil des von der Leuchtdiode w emittierten Lichts koppelt in den Lichtleiter 58 ein und wird durch diesen entlang der Scheibe 26 verteilt. Dabei streut der Lichtleiter 58 in einem parallel zur Scheibe 26 verlaufenden Teil seiner gewinkelten Form das Licht anteilig in Abstrahlrichtungen 38 im Bereich des Lichtleiters 58 aus. Die Abstrahlrichtung 64 und eine Lichtaustrittsfläche 40' der Scheibe 26, zu welcher das Licht der Leuchtdiode w ausgestreut wird, schließen einen Winkel ein, der betragsmäßig kleiner als 50° ist.

In Fig. 4 ist in einem Diagramm ein zeitlicher Verlauf einer Leuchtintensität l dargestellt, wie er sich während eines einzelnen Blinkzyklus 66 eines durch die Leuchtdioden t bis w und die Lichtleiter 54 bis 58 gebildeten Blinklichts ergibt. In einer Aufleuchtphase 68 werden die Leuchtdioden nacheinander eingeschaltet, wobei zunächst die Leuchtdioden t und u als Anfangsgruppe zugleich eingeschaltet werden und anschließend nacheinander die Leuchtdioden v und w. Insgesamt dauert die Aufleuchtphase 68 in diesem Beispiel 150 ms.

Die Leuchtdioden a bis w können beispielsweise weißes Licht oder gelbes Licht emittieren. Die Scheiben 24, 26, 26' können klar oder gefärbt sein. Auch die Lichtleiter 36, 54, 56, 58 können aus einem klaren Material oder einem gefärbten Material gefertigt sein. Bei dem Material kann es sich z.B. um PMMA handeln. Sie können ihr Licht über eine Fläche von z.B. 4 cm² und mehr verteilt ausstreuen.

Indem die Aufleuchtphasen 30, 46, 50, 68 jeweils weniger als 200 ms, hier 150 ms, andauern, werden die gesetzlichen Anforderungen bezüglich des Verbots eines Lauflichts vollständig erfüllt. Dennoch werden zusätzliche Richtungsinformationen innerhalb der Bestimmungen durch das Nacheinandereinschalten der Leuchtdioden integriert. Indem Leuchtdioden zu Gruppen geschaltet werden (Leuchtdioden p) oder breite Abschnitte der Kraftfahrzeugleuchte gleichmäßig mittels der Lichtleiter 36 bzw. 54 ausgeleuchtet werden, ergibt sich für diese Teile der Kraftfahrzeugleuchte 10 das konventionelle Verhalten eines Fahrtrichtungsanzeigers. Durch die daran angrenzenden Teile, die vorzugsweise zu einem seitlichen Rand eines Hecks oder eines Bugs des Fahrzeugs liegen, wird während der Aufleuchtphasen die zusätzliche Richtungsinformation hinzugeschaltet. Diese wird in den von Glühlampen bekannten Zeitdauern von ca. 150 ms hinzugefügt. Die gezeigten Beispiele sind in physiologischen Untersuchungen als besonders geeignet bewertet worden.

Insgesamt ist durch die Beispiele gezeigt, wie bei einem Fahrtrichtungsanzeiger für ein Kraftfahrzeug eine zusätzliche Richtungsinformation integriert werden kann und bei einem Tagfahrlicht, bei einem Positionslicht und einem Schlusslicht eine dynamische Einschaltphase bereitgestellt werden kann.

## Patentansprüche

1. Kraftfahrzeugleuchte (10), bei welcher Licht mittels einer Lichtquelle (I, t bis w) erzeugbar und durch eine Lichtaustrittsfläche (40, 40') hindurch nach außen hin abstrahlbar ist,
**gekennzeichnet durch**
einen Lichtleiter (36, 54 bis 58) aus einem transparenten Material, welcher dazu ausgelegt ist, zumindest einen Teil des Lichts der Lichtquelle (1, t bis w) zu empfangen, das empfangene Licht entlang der Lichtaustrittsfläche (40, 40') zu verteilen und das verteilte Licht zur Lichtaustrittsfläche (40, 40') hin auszustreuen.

2. Kraftfahrzeugleuchte (10) nach Anspruch 1,
**dadurch gekennzeichnet, dass**
die Lichtquelle (I, t bis w) eine Hauptabstrahlrichtung (42, 60, 62, 64)) aufweist, in welche die Lichtquelle (I, t bis w) das Licht mit einer größten Intensität abstrahlt, und die Hauptabstrahlrichtung (42, 60 bis 64) mit der Lichtaustrittsfläche (40, 40') einen Winkel einschließt, der betragsmäßig in einem Bereich von 0° bis 50°, insbesondere von 0° bis 30°, liegt.

3. Kraftfahrzeugleuchte (10) nach Anspruch 1 oder 2,
**dadurch gekennzeichnet, dass**
der Lichtleiter (54 bis 58) einen Körper aus einem für das Licht transparenten Material umfasst, welcher hinter einer die Kraftfahrzeugleuchte (10) nach außen hin begrenzenden, die Lichtaustrittsfläche (40, 40') aufweisenden Lichtscheibe (24, 26) angeordnet ist.

4. Kraftfahrzeug leuchte (10) nach einem der vorhergehenden Ansprüche, **dadurch gekennzeichnet, dass**
bei dem Lichtleiter (54) Licht von zwei Lichtquellen (t, u) an zwei unterschiedlichen Enden (E1, E2) des Lichtwellenleiters (54) einspeisbar ist.

5. Kraftfahrzeugleuchte (10) nach einem der vorhergehenden Ansprüche, **dadurch gekennzeichnet, dass**
eine Mehrzahl von Lichtleitern (54 bis 58) der genannten Art vorgesehen ist, in welche jeweils Licht mittels wenigstens einer Lichtquelle (t bis w) einspeisbar ist.

6. Kraftfahrzeugleuchte (10) nach einem der vorhergehenden Ansprüche, **dadurch gekennzeichnet, dass**
durch die Kraftfahrzeugleuchte (10) wenigstens eine der folgenden Funktionalitäten bereitgestellt ist: Fahrtrichtungsanzeige, Tagfahrlicht, Positionslicht, Schlusslicht, Bremslicht.

7. Verfahren zum Betreiben einer Kraftfahrzeugleuchte (10), indem in einer Aufleuchtphase (30, 46, 50, 68) eine Leuchtintensität (I) eines Lichts, welches von der Kraftfahrzeugleuchte (10) durch eine dafür vorgesehene Gesamtlichtaustrittsfläche (24, 26, 26') insgesamt abgestrahlt wird, in einem für einen menschlichen Betrachter kontinuierlich erscheinenden Vorgang vergrößert wird und hierzu eine Mehrzahl von Leuchtdioden (a bis w) der Kraftfahrzeugleuchte (10) zeitlich nacheinander eingeschaltet und/oder die Leuchtdioden (a bis w) zunächst mit unterschiedlich viel elektrischer Leistung versorgt und anschließend durch kontrolliertes Angleichen der Leistungen in der Helligkeit aneinander angeglichen werden.

8. Verfahren nach Anspruch 7,
**dadurch gekennzeichnet, dass**
eine Zeitdauer der Aufleuchtphase (30, 46, 50, 68) in einem Bereich von 100 ms bis 200 ms, insbesondere von 100 ms bis 160 ms, liegt.

9. Verfahren nach Anspruch 7 oder 8,
**dadurch gekennzeichnet, dass**
in der Aufleuchtphase (30, 46, 50, 68) Leuchtdioden (a bis w) zeitlich nacheinander eingeschaltet werden und hierdurch ein ausgeleuchteter Anteil der Gesamtlichtaustrittsfläche (24, 26, 26'), insbesondere ein örtlich zusammenhängender Anteil, in der Aufleuchtphase (30, 46, 50, 68) kontinuierlich vergrößert wird.

10. Verfahren nach einem der Ansprüche 7 bis 9,
**dadurch gekennzeichnet, dass**
die Kraftfahrzeugleuchte (10) als Blinklicht betrieben wird und hierbei in einer Reihe (22) angeordnete Leuchtdioden (a bis w) zu Beginn wenigstens eines Blinkzyklus (28, 48, 52, 66) eingeschaltet werden und hierzu in der Aufleuchtphase (30, 46, 50, 68) des Blinkzyklus ausgehend von einer wenigstens eine der Leuchtdioden (a bis w) der Reihe (22) umfassenden Anfangsgruppe (a, l, p, t, u) zeitlich nacheinander der Reihe (22) nach weitere Leuchtdioden (b bis j, m, n, q, r, v) der Reihe (22) einzeln oder in Gruppen von benachbarten Leuchtdioden eingeschaltet werden, bis schließlich durch Einschalten einer wenigstens eine Leuchtdiode der Reihe (22) umfassenden Endgruppe (k, o, s, w) die Aufleuchtphase (30, 46, 50, 68) beendet wird und alle Leuchtdioden (a bis w) der Reihe (22) leuchten.

11. Verfahren nach Anspruch 10,
**dadurch gekennzeichnet, dass**
sich die Reihe (22) der Leuchtdioden (a bis w) über wenigstens zwei baulich voneinander getrennte Teile (14, 16) der Kraftfahrzeugleuchte (10) erstreckt und hierbei alle in einem der Teile (14, 16) befindlichen Leuchtdioden (g bis k, l, p, t+u) der Reihe (22) als die Anfangsgruppe (l, p, t+u) oder die Endgruppe (g bis k) betrieben werden, wobei insbesondere ein Teil (14) der Kraftfahrzeugleuchte (10) für einen Einbau in eine Heckklappe (18) eines Kraftfahrzeugs (12) und ein anderer Teil (16) für einen Einbau in einen an die Heckklappe (18) angrenzenden Fahrzeugbereich (20) ausgestaltet ist.

12. Verfahren nach Anspruch 11,
**dadurch gekennzeichnet, dass**
zwischen zwei benachbarten Teilen (14, 16) der Kraftfahrzeugleuchte (10) ein Handshake-Signal (HS) übertragen wird, nachdem alle Leuchtdioden (a bis f) eines der Teile (14) eingeschaltet worden sind, und durch das Handshake-Signal (HS) das Einschalten der Leuchtdioden (g-k) des anderen Teils (16) ausgelöst wird.

13. Verfahren nach einem der Ansprüche 7 bis 12, durch welches eine Kraftfahrzeugleuchte (10) nach einem der Ansprüche 1 bis 6 betrieben wird.

14. Kraftfahrzeugleuchte (10), welche eine Steuereinheit (32, 34) aufweist, die dazu eingerichtet ist, die Kraftfahrzeugleuchte (10) nach einem der Verfahren gemäß Anspruch 7 bis 13 zu betreiben.

15. Kraftwagen (12), welcher wenigstens eine Kraftfahrzeugleuchte (10) gemäß einem der Ansprüche 1 bis 6 oder 14 aufweist.
